# EUROPEAN PATENT SPECIFICATION

(11) **EP 3 235 747 B1**
(45) Date of publication and mention of the grant of the patent: **15.05.2019**
(21) Application number: 15869873.8
(22) Date of filing: 09.12.2015
(51) Int. Cl.: B65D 1/02, B67B 3/22, B65D 83/00

(54) **DELAMINATION CONTAINER AND METHOD FOR ATTACHING A CAP THERETO**
DELAMINATIONSBEHÄLTER SOWIE VERFAHREN ZUR BEFESTIGUNG EINER KAPPE AM DELAMINATIONSBEHÄLTER
RÉCIPIENT DÉLAMINABLE ET PROCÉDÉ POUR Y FIXER UN CAPUCHON

(30) Priority: 19.12.2014 JP 2014258095; 19.12.2014 JP 2014258100; 19.12.2014 JP 2014258101; 19.12.2014 JP 2014258105; 19.02.2015 JP 2015031081; 03.12.2015 JP 2015236867
(43) Date of publication of application: 25.10.2017
(73) Proprietor: Kyoraku Co., Ltd., Kyoto-shi, Kyoto 602-0912 (JP)
(72) Inventor: TARUNO, Shinsuke, Yamato-shi Kanagawa 242-0018 (JP); EGUCHI, Tetsuaki, Yamato-shi Kanagawa 242-0018 (JP); UCHIHASHI, Kentaro, Yamato-shi Kanagawa 242-0018 (JP); YOSHIDA, Kouichiro, Tokyo 103-0004 (JP)
(74) Representative: Gulde & Partner
(86) International application number: PCT/JP2015/084554
(87) International publication number: WO 2016/098668

(56) References cited:
- WO-A1-2014/053212
- WO-A1-2014/069116
- WO-A1-2015/080015
- JP-A- H 092 529
- JP-A- 2005 212 392
- JP-A- 2007 320 644
- JP-A- 2007 320 645
- JP-A- 2009 179 403
- JP-A- 2012 076 758
- JP-A- 2013 071 776
- JP-A- 2013 071 782
- JP-A- 2013 529 580
- JP-A- 2014 088 004
- JP-U- H04 115 114

## Description

### Technical Field

The present invention relates to a delaminatable container having an inner layer delaminating from an outer layer to be shrunk with a decrease in the contents and a method of mounting a cap to the delaminatable container.

### Background Art

PTL 1 discloses configuration of a cap mounted to a beverage bottle. To suppress deformation of bottle in factories, such a cap is generally mounted to a mouth of a bottle while a support ring provided in the mouth of the bottle is supported by a support piece.

In addition, delaminatable containers are known that inhibit entrance of air inside the container by an inner layer delaminated from an outer layer to be shrunk with a decrease in the contents (e.g., PTLs 2 to 3). Such a delaminatable container is provided with an inner bag composed of an inner layer and an outer shell composed of an outer layer. The delaminatable container is generally used by mounting a cap with a check valve to a mouth of a container body.

Such a container body is generally manufactured by blow molding using a tubular laminated parison. The container body has the bottom provided with a sealing portion formed by welding an end of the laminated parison. Since this sealing portion is not resistant to impact, it is provided to protrude from the bottom surface of the container in order to increase the strength. In PTL 3, to increase the strength of the sealing portion even more, welded layers in a sealing portion are welded to be engaged with each other by a plurality of penetration portions.

### Citation List

### Patent Literature

PTL 1: JP 11-292112APTL 2: Japanese Patent No. 3650175
PTL 3: Japanese Patent No. 3401519

A delaminatable container in accordance with the preamble of appended claim 1 is disclosed in WO2014/069116.

### Summary of Invention

### Technical Problem

In order to suppress deformation of delaminatable container as well when a cap is mounted to the container, the present inventors investigated the possibility of providing a support ring of the same configuration as that in PTL 1 in a mouth of the container. The delaminatable container however has two-layer configuration of an inner layer and an outer layer even in the mouth. They thus found that the support ring is provided in the mouth, causing the inner layer to be caught by the outer layer in the area of the support ring and sometimes causing difficulty in delamination of the inner layer from the outer layer.

The present invention was made in view of such circumstances to provide a delaminatable container that is capable of suppressing deformation of the container when a cap is mounted without providing a support ring.

The present invention provides a delaminatable container as described in claim 1, including a container body having a storage portion to store contents and a mouth to discharge the contents from the storage portion, the storage portion and the mouth having an outer layer and an inner layer, and having an inner bag composed of the inner layer to be shrunk with a decrease in the contents, wherein the mouth includes an engagement section to be engaged with a cap mounted to the mouth and a constriction section provided on a storage portion side from the engagement section and constricting inside the mouth, the mouth includes an upright wall extending from an outer edge of an upper wall of the constriction section at an angle between 45 and 135 degrees relative to the upper wall, and a gap is provided between the inner layer at the upper wall and the inner layer at the upright wall.

The present inventors made an intensive investigation on a method for supporting a mouth of a container body by a support without providing a support ring and found that deformation of the container when a cap is mounted is inhibited by providing a constriction section constricting inside the mouth on a lower side from an engagement section to be engaged with the cap mounted to the mouth instead of providing a flanged support ring to support an upper wall of the constriction section by a support.

They also found that the inner layer is prevented from being caught in the outer layer by providing an upright wall extending from an outer edge of the upper wall of the constriction section at an angle between 45 and 135 degrees relative to the upper wall and providing a gap between the inner layer at the upper wall and the inner layer at the upright wall to have come to complete the first aspect of the present invention.

Various embodiments of the present invention are described below as examples. The embodiments below may be combined with each other.

Preferably, the upper wall extends approximately vertically to a central axis of the mouth.

Preferably, the upright wall has an angle between 60 and 120 degrees relative to the upper wall.

Preferably, the container further includes a facing wall extending inside the mouth from an upper edge of the upright wall, wherein a gap is provided between the inner layer at the upper wall and the inner layer at the facing wall.

Preferably, the facing wall has an angle between -10 and 80 degrees relative to the upper wall.

Preferably, the mouth includes an abutment section to abut on an inner ring of the cap, and the abutment section is provided in an area closer to an outlet of the mouth than the engagement section.

Preferably, the mouth circumferentially has a first region provided with the constriction section and a second region provided without the constriction section or provided with a minor constriction section having a constriction amount less than that of the constriction section in the first region, and the second region of the mouth is provided with a fresh air inlet to introduce fresh air into an intermediate space between the outer layer and the inner layer.

Preferably, the fresh air inlet is provided in a position closer to an outlet of the mouth than the upper wall.

Another aspect of the present invention provides a method of mounting a cap to the container above including mounting the cap to the mouth while the mouth is supported by having a support to support the mouth abut on a lower surface of the upper wall when the cap is mounted to the mouth.

The delaminatable container may include a container body having an outer shell and an inner bag, the inner bag to be shrunk with a decrease in contents, wherein the inner bag is composed of an inner layer including an innermost layer to contact with the contents and a cover layer slidable over the innermost layer.

The delaminatable container may have an inner layer configured to include an innermost layer to contact with the contents and a cover layer slidable over the innermost layer. Conventionally, configuration of a cover layer containing an EVOH resin or the like with high oxygen barrier properties integrated with an innermost layer by adhesion has been generally employed. The high rigidity of the EVOH resin accordingly causes difficulty in deformation of the inner layer having the cover layer integrated with the innermost layer and the inner bag is sometimes not smoothly shrunk. In contrast, in the second aspect of the present invention, the innermost layer is not adhered to the cover layer and the innermost layer is slidable over the cover layer. The innermost layer may be accordingly deformed relatively freely even when the cover layer has higher rigidity, and the inner bag is thus shrunk smoothly.

Preferably, the cover layer contains an EVOH resin.

A non claimed method of manufacturing a delaminatable container, the container including a container body having an outer shell and an inner bag, the inner bag to be shrunk with a decrease in contents, the container body having a storage portion to store the contents and a mouth to discharge the contents from the storage portion and also having a central recessed region provided in approximate center of a bottom surface of the storage portion and a peripheral region provided surrounding the central recessed region, the central recessed region recessed toward the mouth more than the peripheral region, may include:
sealing portion forming, in blow molding of a tubular laminated parison including an outer layer constituting the outer shell and an inner layer constituting the inner bag, forming a sealing portion of the laminated parison into a thin film in the central recessed region to protrude beyond a plane defined by the peripheral region; and
sealing portion processing, bending or melting the sealing portion to accommodate the sealing portion in the central recessed region.

A sealing portion in a thin film shape is formed by compressing a laminated parison to protrude from a central recessed region provided in a bottom surface of the storage portion of the container body, and the sealing portion is subjected to bending or melting to reinforce the sealing portion and also accommodate the sealing portion in the central recessed region. When the delaminatable container is a small container such as an eye drop container, the central recessed region is also recessed in a smaller amount and it is not easy to accommodate the sealing portion in the central recessed region. The sealing portion is in a thin film shape, which facilitates accommodation of the sealing portion in the central recessed region by bending or melting.

Preferably, the sealing portion is formed to have a maximum thickness of 1/3 or less of a thickness of the laminated parison.

Preferably, the sealing portion is formed to have an entirely uniform thickness.

The delaminatable container includes a container body having an outer shell and an inner bag, the inner bag to be shrunk with a decrease in contents, wherein the container body includes a storage portion to store the contents and a mouth to discharge the contents from the storage portion. The outer shell includes a fresh air inlet, in the storage portion, communicating an external space with an intermediate space between the outer shell and the inner bag, the storage portion includes a more rigid portion and a less rigid portion with less rigidity than that of the more rigid portion, and the fresh air inlet is provided on a less rigid portion side.

When the delaminatable container is compressed, the less rigid portion is preferentially pressed and greatly deformed, causing noticeable inner layer delamination on the less rigid portion side. In addition, a fresh air inlet is provided on the less rigid portion side to immediately introduce fresh air in inner layer delamination on the less rigid portion side, causing inner layer delamination to proceed much more immediately and the outer shell to restore its original shape immediately.

Preferably, the storage portion has a tubular portion in a tubular shape and a panel portion formed by depressing a portion of the tubular portion, and the panel portion is the more rigid portion and the tubular portion is the less rigid portion.

Preferably, in the tubular portion, the fresh air inlet is provided in a position facing the panel portion.

The mouth includes a mouth-side engagement section provided along an outer circumference of the mouth, the cap includes a cap-side engagement section provided along an inner circumference of the cap, the mouth-side engagement section and the cap-side engagement section are configured to be engageable with each other while the cap is mounted to the mouth, and at least one of the cap and the mouth includes a tilt suppressor to suppress a tilt of the cap relative to the mouth by narrowing a gap between the mouth and the cap in a position more distant from the opening than the cap-side engagement section while the cap is mounted to the mouth.

The present inventors investigated the cause of fresh air entrance and found that a cap sometimes tends to tilt relative to the mouth depending on the shape of the mouth of the container body and the shape of the press-fit cap and the cause is the tendency to form a gap between the cap and the mouth due to the tilt of the cap. Based on the findings, the inventors found that entrance of fresh air inside the container body is inhibited by providing a tilt suppressor to suppress the tilt of the cap relative to the mouth.

Preferably, the tilt suppressor is a mouth-side protrusion provided on the outer circumference of the mouth.

Preferably, the tilt suppressor is a cap-side protrusion provided on the inner circumference of the cap.

Preferably, the storage portion includes a fresh air inlet communicating an external space with an intermediate space between the outer layer and the inner layer.

### Brief Description of Drawings

Figs. 1A and 1B are perspective views illustrating the structure of a container body 3 of a delaminatable container 1 in a first embodiment of the present invention.
Fig. 2 is a cross-sectional view illustrating a state where a valve member 4 is mounted to the container body 3 in Figs. 1A and 1B and a sealing portion 27a is subjected to bending to form a bottom sealing portion 27.
Figs. 3A to 3C are cross-sectional views corresponding to Fig. 2 illustrating a procedure of mounting a cap 23 to a mouth 9 of the container body 3 in Figs. 1A to 2.
Figs. 4A to 4C are cross-sectional views corresponding to Figs. 3A to 3C illustrating a mouth 9 and a cap 23 in a first modification of the first embodiment.
Figs. 5A to 5C are cross-sectional views corresponding to Figs. 3A to 3C illustrating a mouth 9 and a cap 23 in a second modification of the first embodiment.
Fig. 6A is a front view of a tube 5, Fig. 6B is a bottom view of the tube 5, Fig. 6C is an A-A cross-sectional view, Fig. 6D is a B-B cross-sectional view, Fig. 6E is a cross-sectional view of the valve member 4, Fig. 6F is a cross-sectional view illustrating a state of mounting the valve member 4 to an outer shell 12, and Fig. 8G is a cross-sectional view illustrating a state where a mobile part 6 abuts on a stopper 5h to close a cavity 5g.
Figs. 7A and 7B are cross-sectional views illustrating examples of using a sealing member 8 as a cover.
Fig. 8 is a cross-sectional view illustrating configuration of an inner layer 13.
Figs. 9A to 9C illustrate a mouth 9 of a container body 3 in a second embodiment of the present invention, where Fig. 9A is a cross-sectional view corresponding to a section A-A in Fig. 2 and Figs. 9B to 9C are a B-B cross sectional view and a C-C cross sectional view in Fig. 9A.

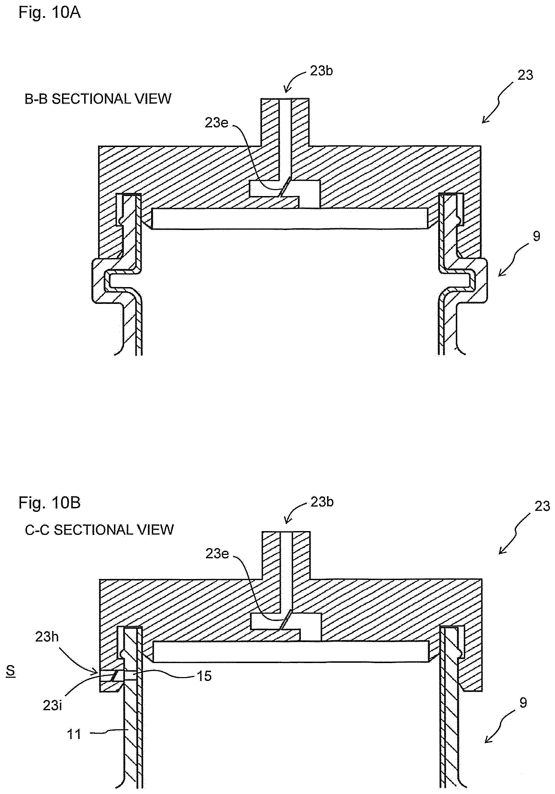

Figs. 10A and 10B are cross-sectional views illustrating a state where a cap 23 is mounted to a mouth 9 in Figs. 9B to 9C.
Figs. 11A to 11C illustrate a mouth 9 of a container body 3 in a first modification of the second embodiment, where Fig. 11A is a cross-sectional view corresponding to the section A-A in Fig. 2 and Figs. 11B and 11C are a B-B cross sectional view and a C-C cross sectional view in Fig. 11A.
Figs. 12A to 12C illustrate a mouth 9 of a container body 3 in a second modification of the second embodiment, where Fig. 12A is a cross-sectional view corresponding to the section A-A in Fig. 2 and Figs. 12B and 12C are a B-B cross sectional view and a C-C cross sectional view in Fig. 12A.
Figs. 13A to 13C illustrate a mouth 9 of a container body 3 in a third modification of the second embodiment, where Fig. 13A is a cross-sectional view corresponding to the section A-A in Fig. 2 and Figs. 13B and 13C are a B-B cross sectional view and a C-C cross sectional view in Fig. 13A.
Figs. 14A and 14B illustrate a delaminatable container 1 in a third embodiment of the present invention, where Fig. 14A is a front view in the state where a cap 23 and a valve member 4 are mounted to a container body 3 and Fig. 14B is a front view only illustrating the container body 3.
Fig. 15A is an A-A cross-sectional view in Fig. 14A, Fig. 15B is a cross-sectional view in the state where a cap cover 23m of the cap 23 in Fig. 15A is opened, and Fig. 15C is a cross-sectional view illustrating a mouth 9 extracted from Fig. 15A.
Figs. 16A and 16B are cross-sectional views corresponding to Fig. 15A to illustrate a procedure of mounting the cap 23 to the mouth 9.
Fig. 17A is a perspective view of a valve member 4 and Figs. 17B and17C are cross-sectional views illustrating motion of the valve member 4.
Fig. 18 is a cross-sectional view illustrating layer configuration of an inner layer 13.
Fig. 19 is a cross-sectional view corresponding to Fig. 15A illustrating a mouth 9 and a cap 23 in a reference example of the present invention.
Figs. 20A and 20B are cross-sectional views corresponding to Fig. 15A illustrating a mouth 9 and a cap 23 in a fourth embodiment of the present invention.

### Description of Embodiments

### 1. First Embodiment

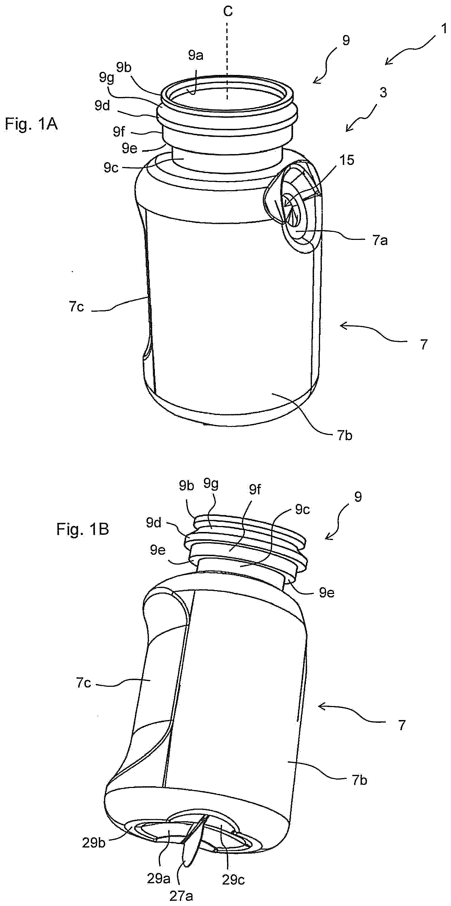

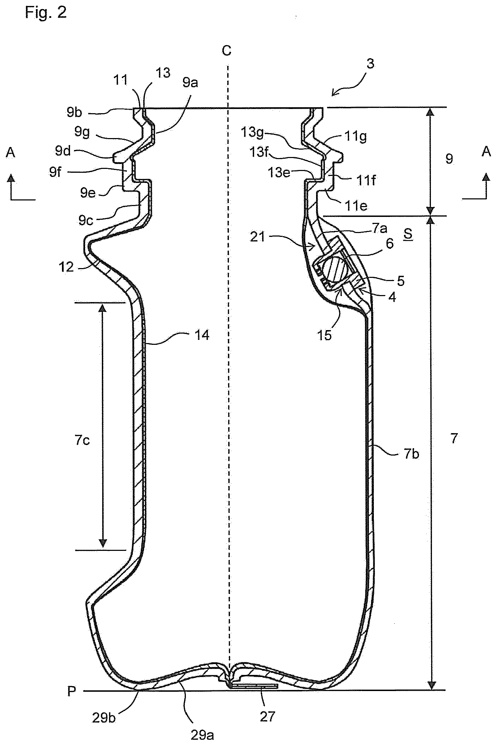

As illustrated in Figs. 1A through 2D, a delaminatable container 1 in the first embodiment of the present invention is provided with a container body 3 and a valve member 4. The container body 3 is provided with a storage portion 7 to store the contents and a mouth 9 to deliver the contents from the storage portion 7.

As illustrated in Fig. 2, the container body 3 includes an outer layer 11 and an inner layer 13 in the storage portion 7 and the mouth 9, where the outer layer 11 constitutes an outer shell 12 and the inner layer 13 constitutes an inner bag 14. Due to separation of the inner layer 13 from the outer layer 11 with a decrease in the contents, the inner bag 14 separates from the outer shell 12 to be shrunk. Preliminary delamination is sometimes performed to delaminate the inner layer 13 from the outer layer 11 prior to storage of the contents in the storage portion 7. In this case, the inner layer 13 is contacted with the outer layer 11 by blowing air or storing the contents in the storage portion 7 after preliminary delamination. The inner layer 13 then separates from the outer layer 11 with a decrease in the contents. Meanwhile, when preliminary delamination is not performed, the inner layer 13 is delaminated from the outer layer 11 in discharge of the contents to separate from the outer layer 11.

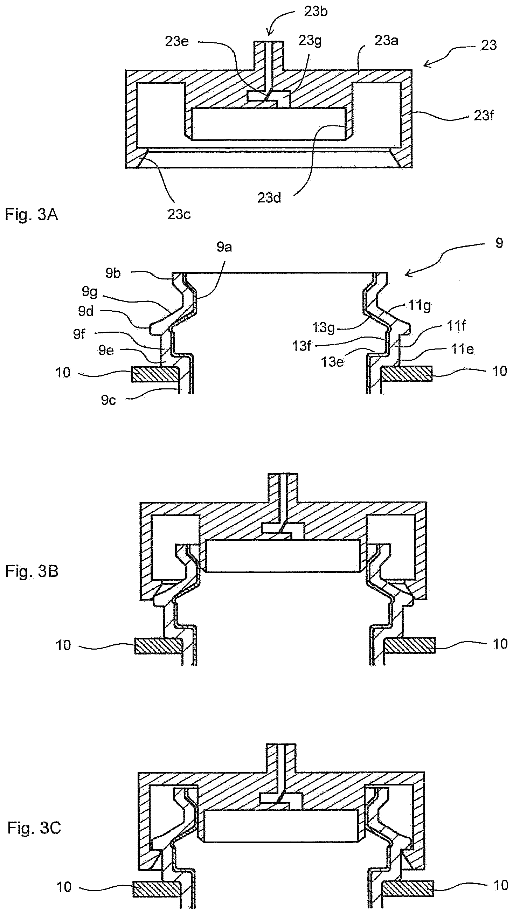

The mouth 9 includes an engagement section 9d. In the present embodiment, the mouth 9 is assumed to have a press-fit cap 23 mounted thereto as illustrated in Figs. 3A to 3C. The engagement section 9d is a ring-shaped projection to be engaged with an engagement section 23c of the cap 23. Note that, in other embodiments, a cap, a pump, or the like with an internal thread may be mounted to the mouth 9, and in such a case, the engagement section 9d is configured with an external thread.

The mouth 9 also includes a constriction section 9c constricting inside the mouth 9 on the storage portion 7 side from the engagement section 9d. The constriction section 9c has an upper wall 9e extending approximately perpendicular to a central axis C of the mouth 9. The mouth 9 also includes an upright wall 9f extending from an outer edge of the upper wall 9e at an angle between 45 and 135 degrees relative to the upper wall 9e. The upright wall 9f has an angle to the upper wall 9e preferably from 60 to 120 degrees and more preferably from 75 to 105 degrees. In the present embodiment, the upright wall 9f approximately vertically extends to the upper wall 9e. Between an inner layer 13e at the upper wall 9e and an inner layer 13f at the upright wall 9f, a gap is provided and the inner layer 13e and the inner layer 13f are not fused together. In other words, the inner layer 13 is not caught by the outer layer (11e, 11f) at the upper wall 9e and at the upright wall 9f.

In addition, a facing wall 9g is provided extending from an upper edge of the upright wall 9f inside the mouth 9 (in the central axis C direction). The facing wall 9g is at an angle to the upper wall 9e for example, but not particularly limited to, from -10 to 80 degrees and of approximately 30 degrees in the present embodiment. Between the inner layer 13e at the upper wall 9e and an inner layer 13g at the facing wall 9g, a gap is provided and the inner layer 13e and the inner layer 13g are not integrated. In other words, the inner layer 13 is not caught in the outer layer 11e at the upper wall 9e and an outer layer 11g at the facing wall 9g.

As just described, in the present embodiment, the inner layer 13 is not confined to the outer layer 11 in the mouth 9, and the inner layer 13 thus smoothly delaminates from the outer layer 11.

Next, with reference to Figs. 3A to 3C, a method of mounting the cap 23 to the mouth 9 is described. The cap 23 to be mounted includes a cap body (body portion) 23a, an outlet 23b provided in the cap body 23a, the engagement section 23c provided at an approximate end of a tubular portion (outer circumference portion) 23f cylindrically extending from the cap body 23a, an inner ring 23d cylindrically extending from the cap body 23a inside the tubular portion 23f, a flow passage 23g provided inside the inner ring 23d and communicating with the outlet 23b, and a check valve 23e provided in the flow passage 23g. While the cap 23 is mounted to the mouth 9, the contents in the storage portion 7 are discharged from the outlet 23b through the flow passage 23g. Meanwhile, the check valve 23e blocks an incoming flow of fresh air from the outlet 23b, and fresh air does not enter inside the inner bag 14 of the container body 3 to inhibit content degradation. The structure of the cap 23 described here is merely an example, and for example, a cap 23 having a check valve of another configuration may be employed.

For mounting of the cap 23, first, to suppress deformation of the storage portion 7 due to the impact of mounting the cap 23, as illustrated in Fig. 3A, a support 10 is brought to abut on a lower surface of the upper wall 9e of the constriction section 9c. In that state, as illustrated in Figs. 3B to 3C, the engagement section 23c of the cap 23 is engaged with the engagement section 9d of the mouth 9. When the engagement section 23c passes over the engagement section 9d from the state in Fig. 3B, the tubular portion 23f of the cap 23 transforms to enlarge the diameter and the mouth 9 transforms to reduce the diameter, and thus it is easier to mount the cap 23 when the mouth 9 readily transforms. The mouth 9 in the present embodiment is however not provided with a support ring as disclosed in JP 11-292112A and the mouth 9 is supported by having the support 10 abutting on the lower surface of the upper wall 9e of the constriction section 9c. The mouth 9 thus readily transforms, and mounting of the cap 23 is facilitated. In addition, since the mouth 9 readily transforms, the inner bag 14 readily transforms in the area near a container opening and it helps to use the contents up.

The mouth 9 also includes an abutment section 9a on which an outer surface of the inner ring 23d abuts. Leakage of the contents is prevented by the outer surface of the inner ring 23d abutting on the abutment section 9a of the mouth 9. In the present embodiment, the mouth 9 is equipped with an enlarged diameter portion 9b at the end. The enlarged diameter portion 9b has an inner diameter greater than the inner diameter in an abutment portion 9a, and thus the outer surface of the inner ring 23d does not make contact with the enlarged diameter portion 9b. When the mouth 9 does not have the enlarged diameter portion 9b, a defect sometimes occurs in which the inner ring 23d enters between the outer layer 11 and the inner layer 13 in the case where the mouth 9 has an even slightly smaller inner diameter due to variations in manufacturing. In contrast, when the mouth 9 has the enlarged diameter portion 9b, such defect does not occur even in the case where the mouth 9 has a slightly varied inner diameter.

Even when the mouth 9 includes the enlarged diameter portion 9b, there is a risk of delamination of the inner layer 13 from the outer layer 11 due to the friction between the inner ring 23d and the abutment section 9a. In the present embodiment, however, the constriction section 9c is provided in a position closer to the storage portion 7 than the abutment section 9a to inhibit slipping off of the inner layer 13 by the constriction section 9c. Dropping of the inner bag 14 into the outer shell 12 is thus inhibited. The constriction section 9c thus has a function of inhibiting slipping off of the inner layer 13 and also has a function as a support area for the mouth 9 by the support 10 when the cap 23 is mounted.

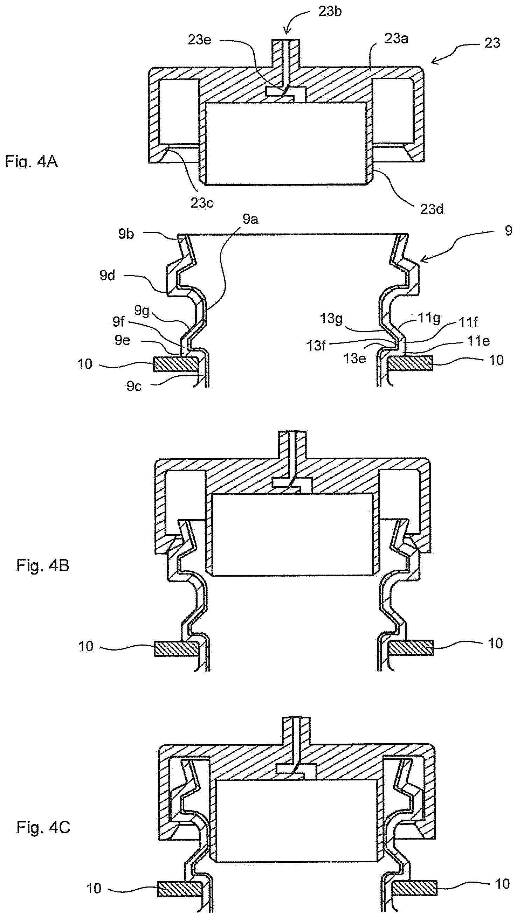

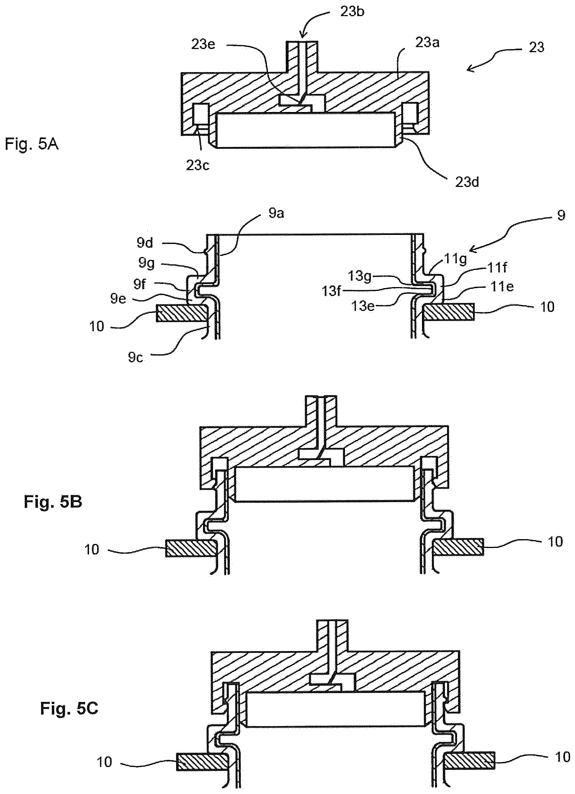

Here, with reference to Figs. 4A to 5C, a mouth 9 and a cap 23 in the first to second modifications of the first embodiment are described.

The first modification illustrated in Figs. 4A to 4C mainly differs in the position of an abutment section 9a from the configuration in Figs. 3A to 3C. In the configuration of Figs. 3A to 3C, the abutment section 9a is in a position closer to the container opening than the engagement section 9d, whereas in the configuration of Figs. 4A to 4C, the abutment section 9a is distant from the container opening relative to the engagement section 9d and is provided between the engagement section 9d and the constriction section 9c. Although either configuration may be applied, the configuration in Figs. 3A to 3C is more advantageous in that, in addition to the volume of the container body 3 can be effectively used, the inner layer 13 is delaminatable in a position closer to the container opening to discharge the contents fully.

The second modification illustrated in Figs. 5A to 5C mainly differs in a facing wall 9g approximately parallel to the an upper wall 9e to form a horizontally-flipped approximate U shape by the upper wall 9e, an upright wall 9f, and the facing wall 9g from the configuration in Figs. 3A to 3C. In such configuration, a gap is provided between the inner layers13e, 13f, 13g and they are not integrated, and the actions and effects are thus obtained that are same as those in the configuration of Figs. 3A to 3C. In the configuration of Figs. 5A to 5C, a shorter distance between the upper wall 9e and the facing wall 9g tends to cause contact of the inner layer 13e with the inner layer 13g to be integrated. The distance between the lower surface of the upper wall 9e and an upper surface of the facing wall 9g is preferably 2.5 times or more of the thickness of the upper wall 9e (total thickness of the outer layer 11e and the inner layer 13e). In this case, a gap with approximately half thickness of the thickness of the upper wall 9e is formed between the inner layer 13e and the inner layer 13g.

As illustrated in Figs. 1A to 2, the storage portion 7 is in an approximately cylindrical shape and has a tubular portion 7b in a tubular shape and a panel portion 7c formed by depressing a portion of the tubular portion 7b. Since the container body 3 is formed by blow molding of a tubular (e.g., cylindrical) laminated parison, the container body 3 has a smaller thickness in an area at a greater blow ratio (an area more distant from the central axis C). Since the panel portion 7c is closer to the central axis C than the tubular portion 7b, it has a greater thickness than that of the tubular portion 7b. The panel portion 7c accordingly has greater rigidity than that of the tubular portion 7b, and the panel portion 7c becomes a more rigid portion and the tubular portion 7b becomes a less rigid portion.

The contents in the storage portion 7 are discharged by deformation due to compression of the storage portion 7. When the tubular portion 7b and the panel portion 7c are pinched to compress the storage portion 7, the less rigid tubular portion 7b is preferentially deformed and the amount of deformation in the tubular portion 7b is greater than that in the panel portion 7c. Since the inner layer 13 tends to be delaminated from the outer layer 11 in the area of a greater amount of deformation, delamination of the inner layer 13 tends to preferentially proceed in the tubular portion 7b. In the present embodiment, the outer shell 12 includes a fresh air inlet 15, in the storage portion 7, communicating an external space S of the container body 3 with an intermediate space 21 between the outer shell 12 and the inner bag 14. Since the fresh air inlet 15 is provided on the tubular portion (less rigid portion) 7b side, fresh air is smoothly introduced into the intermediate space 21 between the outer shell 12 and the inner bag 14 when the inner layer 13 is delaminated and the inner layer 13 is smoothly delaminated from the outer layer 11. Accordingly, the inner bag 14 is smoothly shrunk when the storage portion 7 is compressed and the outer shell 12 smoothly restores its original shape when the compressive force is removed.

While the fresh air inlet 15 may be provided in an arbitrary position of the tubular portion (less rigid portion) 7b, it is preferably provided in a position facing the panel portion 7c. This is because, when tubular portion 7b and the panel portion 7c are pinched to compress the storage portion 7, the tubular portion 7b is most greatly deformed in the position facing the panel portion 7c.

In the present embodiment, the fresh air inlet 15 includes the valve member 4 to regulate entrance and exit of air between the intermediate space 21 and the external space S. The valve member 4 is mounted to a valve member mounting recess 7a provided in the storage portion 7. When the storage portion 7 is compressed, the valve member 4 of is closed to block an air flow from the intermediate space 21 to the external space S and thus has a function of increasing the pressure in the intermediate space 21 to facilitate transmission of the pressure exerted on the outer shell 12 to the inner bag 14. Accordingly, even when the contents in the inner bag 14 are decreased, the contents are readily discharged. In contrast, when the compressive force applied to the storage portion 7 is removed, the valve member 4 is opened and has a function of passing therethrough the air from the external space S to the intermediate space 21. Accordingly, fresh air is introduced into the intermediate space 21 and the outer shell 12 smoothly restores its original shape. The valve member 4 is not an essential component because, even with no valve member 4, the inner bag 14 can be directly compressed through the outer shell 12 by greatly deforming the outer shell 12.

As just described, the valve member 4 may have a function of opening and closing the fresh air inlet 15, and the configuration examples include a configuration where the valve member 4 itself is provided with a through hole and an on-off valve, which acts to open and close the through hole for opening and closing of the fresh air inlet 15 and a configuration where a gap between the valve member 4 and an edge of the fresh air inlet 15 is opened and closed by movement of the valve member 4 for opening and closing of the fresh air inlet 15 by the valve member 4. The former valve member 4 is suitably applied to a particularly small container, such as an eye drop container, because the valve member 4 functions with no problem even when the size of the fresh air inlet 15 is somewhat varied.

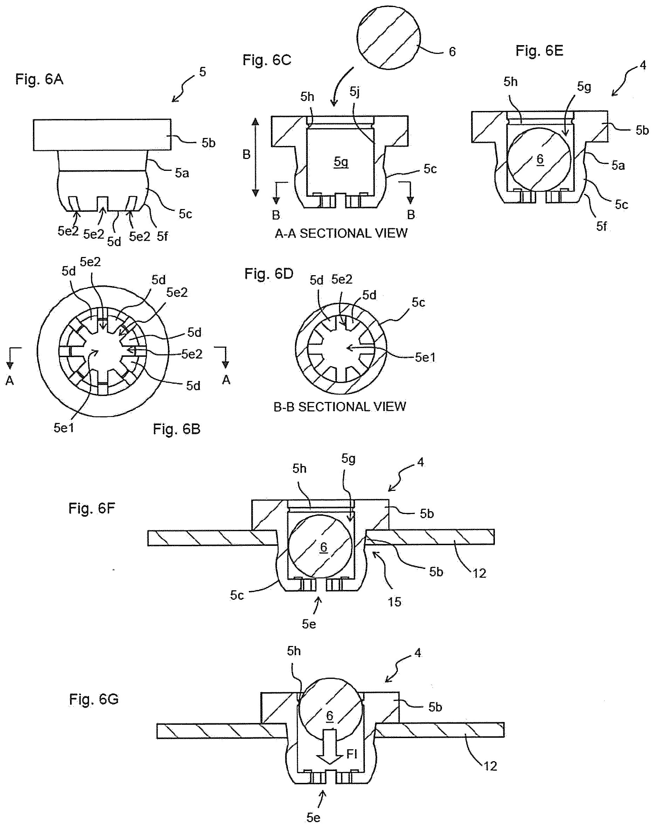

Here, with reference to Figs. 2 and 6A to 7B, an example of the valve member 4 is described. The valve member 4 is provided with a tube 5 having a cavity 5g provided to communicate the external space S with the intermediate space 21 and a mobile part 6 movably stored in the cavity 5g. The tube 5 and the mobile part 6 are formed by injection molding or the like, and the mobile part 6 is disposed in the cavity 5g by pressing the mobile part 6 into the cavity 5g to pass over a stopper 5h described later. In the present embodiment, the cavity 5g has an approximately cylindrical shape and the mobile part 6 has an approximately spherical shape while they may have another shape as long as the shape is capable of achieving same functions as those in the present embodiment. The cavity 5g has a diameter in a horizontal cross section (cross section in Fig. 6D) slightly larger than the corresponding diameter of the mobile part 6 and has a shape allowing the mobile part 6 to freely move in arrow B directions in Fig. 6C. A value of the ratio defined by the diameter of the cavity 5g in the horizontal cross section / the corresponding diameter of the mobile part 6 is preferably from 1.01 to 1.2 and more preferably from 1.05 to 1.15. This is because a too small value of the ratio causes interference with smooth movement of the mobile part 6 and a too large value of this ratio causes an excessive increase in the gap between the mobile part 6 and a surface 5j surrounding the cavity 5g and thus an insufficient force tends to be applied to the mobile part 6 for compression of the container body 3.

The tube 5 has a stem 5a disposed in the fresh air inlet 15, a locking portion 5b provided on the external space S side of the stem 5a and preventing entrance of the tube 5 into the intermediate space 21, and a diametrically expanded portion 5c provided on the intermediate space 21 side of the stem 5a and preventing drawing of the tube 5 from outside the container body 3. The stem 5a has a tapered shape towards the intermediate space 21 side. That is, the stem 5a has an outer circumferential surface providing a tapered surface. The outer circumferential surface of the stem 5a closely contacts with an edge of the fresh air inlet 15 to mount the tube 5 to the container body 3. Such configuration allows reduction in the gap between the tube 5 and the edge of the fresh air inlet 15. As a result, when the container body 3 is compressed, it is possible to inhibit leakage of the air in the intermediate space 21 from the gap between the tube 5 and the edge of the fresh air inlet 15. The tube 5 is mounted to the container body 3 by making the outer circumferential surface of the stem 5a close contact with the edge of the fresh air inlet 15, and the diametrically expanded portion 5c is thus not essential.

The surface 5j surrounding the cavity 5g is provided with a stopper 5h to lock the mobile part 6 in movement of the mobile part 6 from the intermediate space 21 side towards the external space S side. The stopper 5h is configured with an annular projection, and when the mobile part 6 abuts on the stopper 5h, to block air communication through the cavity 5g.

The tube 5 has an end providing a flat surface 5d, and the flat surface 5d is provided with an opening 5e in communication with the cavity 5g. The opening 5e has an approximately circular central opening 5e1 provided at the center of the flat surface 5d and a plurality of slits 5e2 radially extending from the central opening 5e1. Such configuration does not interfere with air flow even when the mobile part 6 abuts on the bottom of the cavity 5g.

As illustrated in Fig. 6F, when the valve member 4 is inserted into the fresh air inlet 15 from the diametrically expanded portion 5c side and the locking portion 5b is pressed into a position to abut on an outer surface of the outer shell 12, the outer circumferential surface of the stem 5a is held in the outer shell 12 in close contact with the edge of the fresh air inlet 15. When the outer shell 12 is compressed while air is in the intermediate space 21, the air in the intermediate space 21 enters into the cavity 5g through the opening 5e and causes the mobile part 6 to be lifted and abut on the stopper 5h. When the mobile part 6 abuts on the stopper 5h, the air flow through the cavity 5g is blocked.

When the outer shell 12 is further compressed in this state, the pressure in the intermediate space 21 is increased, and as a result, the inner bag 14 is compressed to deliver the contents in the inner bag 14. When the compressive force to the outer shell 12 is released, the outer shell 12 attempts to restore its shape by the elasticity of its own. The pressure in the intermediate space 21 is reduced with the restoration of the outer shell 12, and as illustrated in Fig. 6G, a force FI in direction inside the container is applied to the mobile part 6. This causes the mobile part 6 to move towards the bottom of the cavity 5g to the state illustrated in Fig. 6F. Fresh air is thus introduced in the intermediate space 21 through the opening 5e and the gap between the mobile part 6 and the surface 5j.

The valve member 4 is allowed to be mounted to the container body 3 by inserting the diametrically expanded portion 5c into the intermediate space 21 while pressing and expanding the fresh air inlet 15 by the diametrically expanded portion 5c. The diametrically expanded portion 5c thus has an end preferably in a tapered shape. Being mounted only by pressing the diametrically expanded portion 5c into the intermediate space 21 from outside the container body 3, such valve member 4 is excellent in productivity. Since the tube 5 has an end provided with the flat surface 5d, the inner bag 14 is not easily damaged even when the valve member 4 is pressed into the intermediate space 21 and the end of the valve member 4 collides with the inner bag 14.

The container may be configured to provide a cover preventing introduction of fresh air into the intermediate space 21 by covering the surroundings of the valve member 4 and the fresh air inlet 15 with the valve member 4 mounted thereto. Such configuration prevents entrance of an odorous gas in a factory into the intermediate space 21 during production. For example, after the inner bag 14 is filled with the contents, the cover may be mounted in a clean atmosphere. Such configuration allows prevention of, for sterilization of the container in high temperature steam, entrance of the steam from the fresh air inlet 15 into the intermediate space 21, causing water remained in the intermediate space 21. While the valve member 4 and the fresh air inlet 15 are covered with the cover, fresh air is not introduced in the intermediate space 21 and the outer shell 12 does not restore its shape after compression. Users are thus supposed to use the container in a state of removing the cover.

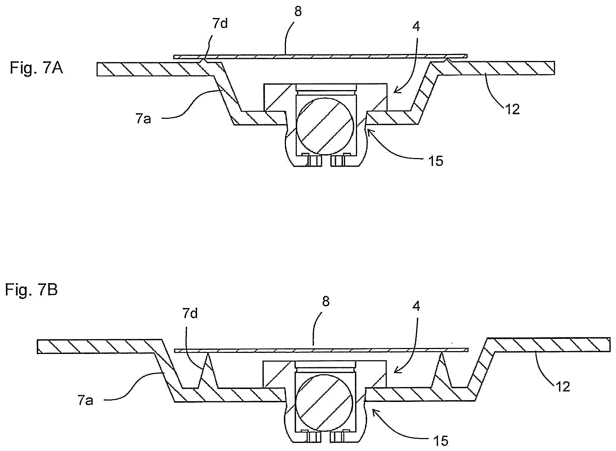

As illustrated in Figs. 7A and 7B, specific configuration examples include a configuration of providing a sealing member 8 to be adhered around the valve member 4 and the fresh air inlet 15. In the example of Fig. 7A, the sealing member 8 is pasted over an annular convex 7d provided surrounding the valve member mounting recess 7a. In the example of Fig. 7B, the sealing member 8 is pasted over the annular convex 7d provided surrounding the valve member 4 and the fresh air inlet 15 in the valve member mounting recess 7a. The example of Fig. 7B allows avoiding of protrusion of the sealing member 8 from the surface of the outer shell 12.

As illustrated in Figs. 1A to 2, the storage portion 7 has a bottom surface 29 with a central recessed region 29a and a peripheral region 29b provided surrounding the central recessed region 29a. In the central recessed region 29a, as illustrated in Fig. 2, a bottom sealing portion 27 is provided that protrudes from the bottom surface 29. A method of forming the bottom sealing portion 27 is as follows.

First, as illustrated in Fig. 1B, in blow molding of a tubular laminated parison including the outer layer 11 and the inner layer 13, a sealing portion 27a of the laminated parison is formed into a thin film to protrude beyond a plane P (illustrated in Fig. 2) defined by the peripheral region 29b in the central recessed region 29a (sealing portion forming procedure). The sealing portion 27a is formed by sandwiching a laminated parison with a split die for compression in blow molding. The sealing portion 27a is formed to have a maximum thickness of preferably 1/3 or less (more preferably, 1/4, 1/5, or less) of the thickness of the laminated parison. The sealing portion 27a has a thickness of, for example, from 0.1 to 0.4 mm and preferably from 0.2 to 0.3 mm. In an example, a tubular laminated parison with a thickness of 1.5 mm is compressed to 0.25 mm in the sealing portion 27a. The sealing portion 27a is preferably formed to have an entirely uniform thickness.

Next, as illustrated in Fig. 2, the bottom sealing portion 27 is formed by bending the sealing portion 27a to accommodate the sealing portion 27a in the central recessed region 29a. Since the sealing portion 27a is in an extremely thin film shape, it is readily bent to be accommodated in the central recessed region 29a. The sealing portion 27a may be subjected to melting, instead of bending. Since the sealing portion 27a is in an extremely thin film shape, it is readily melted to be accommodated in the central recessed region 29a.

The formation of the bottom sealing portion 27 by bending or melting the sealing portion 27a allows improvement in impact resistance on the bottom surface 29 of the container body 3. In addition, the bottom sealing portion 27 does not protrude from the plane P. This prevents, when the delaminatable container 1 is stood, inhibition of self-supportability of the delaminatable container 1 due to the bottom seal protrusion 27 sticking out of the plane P.

As illustrated in Fig. 1B, a recess region in the bottom surface 29 is provided across the entire bottom surface 29 in a longitudinal direction of the sealing portion 27a. That is, the central recessed region 29a is connected to a peripheral recess region 29c. Such configuration facilitates bending of the sealing portion 27a.

The layer structure of the container body 3 is described below in further detail. The container body 3 is provided with the outer layer 11 and the inner layer 13. The outer layer 11 is formed thicker than the inner layer 13 so as to increase the restorability thereof.

The outer layer 11 is formed of, for example, low-density polyethylene, linear low-density polyethylene, high-density polyethylene, polypropylene, ethylene-propylene copolymer, or a mixture thereof, or the like. For a container having a diameter of 30 mm or less, the outer layer 11 is preferably formed to contain low-density polyethylene. Such configuration facilitates squeeze to discharge the contained liquid. For example, the outer layer 11 may be composed of a single layer of low-density polyethylene. As another example, the outer layer 11 may be composed of a multilayer of low-density polyethylene and a recycled material using burrs generated during molding.

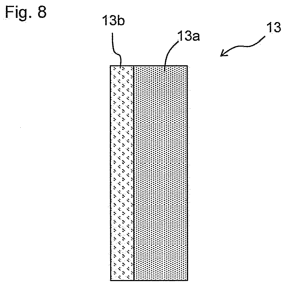

As illustrated in Fig. 8, in the present embodiment, the inner layer 13 includes an innermost layer 13a to make contact with the contents and a cover layer 13b slidable over the innermost layer 13a. Configuration of a cover layer 13b containing an EVOH resin or the like with high oxygen barrier properties integrated with the innermost layer 13a by adhesion is generally employed. The high rigidity of the EVOH resin accordingly causes difficulty in deformation of the inner layer 13 having the cover layer 13b integrated with the innermost layer 13a and the inner bag 14 is sometimes not smoothly shrunk. In contrast, in the present embodiment, the innermost layer 13a is not adhered to the cover layer 13b and the innermost layer 13a is slidable over the cover layer 13b. The innermost layer 13a may be accordingly deformed relatively freely even when the cover layer 13b has higher rigidity, and the inner bag 14 is thus shrunk smoothly. In addition, since the innermost layer 13a is separated from the cover layer 13b, no problem arises as long as the innermost layer 13a is not damaged even when the cover layer 13b is damaged by mistake during formation of the fresh air inlet 15.

When the innermost layer 13a and the cover layer 13b are not adhered, the fresh air inlet 15 may be formed to penetrate the outer layer 11 and the cover layer 13b. In this case, fresh air is introduced even into the space between the innermost layer 13a and the cover layer 13b.

The innermost layer 13a is a layer to make contact with the contents of the delaminatable container 1. It contains, for example, polyolefin, such as low-density polyethylene, linear low-density polyethylene, high-density polyethylene, polypropylene, an ethylene-propylene copolymer, and a mixture thereof, an EVOH resin, and the like. The resin constituting the innermost layer 13a preferably has a tensile modulus of elasticity from 50 to 300 MPa and more preferably from 70 to 200 MPa. This is because the innermost layer 13a is particularly flexible when the tensile modulus of elasticity is in such a range. Specifically, the tensile modulus of elasticity is, for example, 50, 100, 150, 200, 250, and 300 Mpa or it may be in a range between any two values exemplified here. When the contents are a chemical solution, the innermost layer 13a is preferably of polypropylene or an EVOH resin not to cause easy adsorption of the chemical components by the innermost layer 13a. In this case, a more flexible inner layer allows smooth shrinking of the inner layer and prevention of pinholes and the like. The innermost layer 13a is thus particularly preferred to be formed using polypropylene. From the perspective of flexibility, a propylene random copolymer is particularly preferred for the innermost layer 13a. The propylene random copolymer is a random copolymer of propylene and another monomer and has a content of the monomer other than propylene of less than 50 mol%, preferably from 5 to 35 mol%. Specifically, the content is, for example, 5, 10, 15, 20, 25, and 30 mol% or it may be in a range between any two values exemplified here. As the monomer to be copolymerized with propylene, ethylene is particularly preferred. In the case of a propylene-ethylene random copolymer, the ethylene content is preferably from 5 to 30 mol% and specifically, for example, 5, 10, 15, 20, 25, and 30 mol% or it may be in a range between any two values exemplified here.

The cover layer 13b is a layer provided to give oxygen barrier properties and the like and preferably contains an EVOH resin. When the cover layer 13b contains an EVOH resin, the delamination properties between the outer layer 11 and the inner layer 13 becomes good.

The EVOH resin is an ethylene-vinyl alcohol copolymer (EVOH) resin and is obtained by hydrolysis of a copolymer of ethylene and vinyl acetate. The EVOH resin has an ethylene content, for example, from 25 to 50 mol%, and from the perspective of oxygen barrier properties, it is preferably 32 mol% or less. Although not particularly defined, the lower limit of the ethylene content is preferably 25 mol% or more because the flexibility of the EVOH resin is prone to decrease when the ethylene content is less. The EVOH resin preferably contains an oxygen absorbent. The content of an oxygen absorbent in the EVOH resin further improves the oxygen barrier properties of the EVOH resin.

The EVOH resin preferably has a melting point higher than the melting point of the resin contained in the outer layer 11. When the fresh air inlet 15 is formed in the outer layer 11 using a thermal perforator, the inlet can be prevented from reaching the inner layer 13 in formation of the fresh air inlet 15 in the outer layer 11 by the EVOH resin having a melting point higher than the melting point of the resin contained in the outer layer 11. From this perspective, a greater difference of (Melting Point of EVOH) - (Melting Point of Resin contained in Outer Layer 11) is desired, and it is preferably 15°C or more and particularly preferably 30°C or more. The difference in melting points is, for example, from 5°C to 50°C. Specifically, it is, for example, 5, 10, 15, 20, 25, 30, 35, 40, 45, and 50°C or it may be in a range between any two values exemplified here.

As long as the appended claims do not limit the configuration of the inner layer, the configuration of the inner layer 13 is not limited. In this case, an adhesion layer may be provided between the innermost layer 13a and the cover layer 13b. The adhesion layer is a layer having a function of adhering the cover layer 13b to the innermost layer 13a, and it is, for example, a product of adding acid modified polyolefin (e.g., maleic anhydride modified polyethylene) with carboxyl groups introduced therein to polyolefin described above or an ethylene-vinyl acetate copolymer (EVA). An example of the adhesion layer is a mixture of acid modified polyethylene with low-density polyethylene or linear low-density polyethylene.

### 2. Second Embodiment

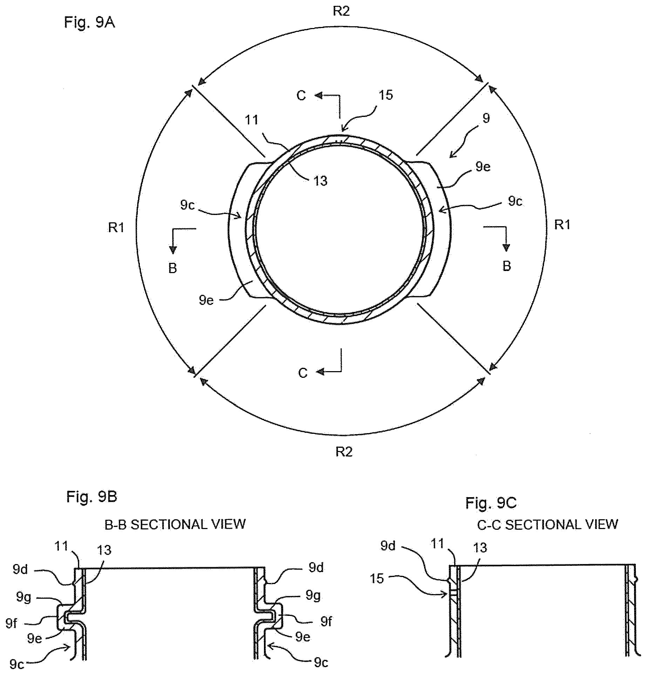

With reference to Figs. 9A to 9C, a delaminatable container in the second embodiment of the present invention is described. The second embodiment is similar to the second modification of the first embodiment and mainly differs in that a fresh air inlet 15 is provided in a mouth 9, that a constriction section 9c has different configuration, and that a check valve 23i is provided in a cap 23, instead of the valve member 4. The following description is given mainly to the differences.

In the first embodiment, the mouth 9 is provided with the constriction section 9c to have a uniform constriction amount across the entire circumference of the mouth 9, whereas in the present embodiment, the mouth 9 circumferentially has a first region R1 and a second region R2. The first region R1 is configured to include the constriction section 9c, and the second region R2 not to include the constriction section 9c. That is, in the present embodiment, the constriction section 9c is provided only in part of the circumference of the mouth 9. The fresh air inlet 15 is provided in the second region R2.

The cap 23 includes a flow passage 23h provided to communicate the fresh air inlet 15 with the external space S and the check valve 23i provided in the flow passage 23h. The check valve 23i has functions of closing the flow passage 23h, when the storage portion 7 is compressed, to increase the pressure in the intermediate space 21 and opening the flow passage 23h, when the compressive force applied to the storage portion 7 is removed, to pass air therethrough flowing from the external space S to the intermediate space 21. To facilitate communication with the flow passage 23h provided in the cap 23, the fresh air inlet 15 is preferably provided in a position closer to an outlet of the mouth 9 than the upper wall 9e and more preferably provided in a position closer to the outlet of the mouth 9 than the facing wall 9g.

In the present embodiment, the fresh air inlet 15 is provided in the second region R2 where the constriction section 9c is not provided, and thus there is no constriction section 9c between the fresh air inlet 15 provided in the mouth 9 and the storage portion 7. Accordingly, a flow passage for fresh air is more readily formed between the fresh air inlet 15 and the intermediate space 21 between the outer layer 11 and the inner layer 13 in the storage portion 7 and thus fresh air is more readily introduced into the intermediate space 21.

### First Modification of Second Embodiment

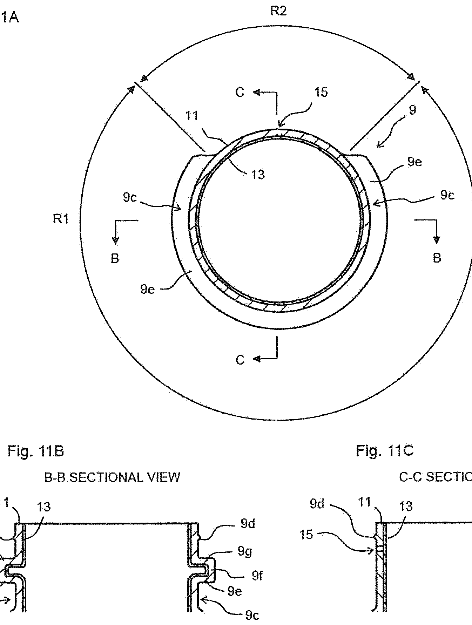

In the second embodiment, the first region R1 and the second region R2 are alternately provided in two areas each on the circumference of the mouth 9 and the first region R1 and the second region R2 are provided respectively at an angle in the range of approximately 90 degrees. Meanwhile, in the first modification, as illustrated in Figs. 11A to 11C, the first region R1 and the second region R2 are provided in one area each on the circumference of the mouth 9. In such an embodiment as well, it is possible to provide the fresh air inlet 15 in the second region R2 and obtain the same actions and effects as those in the second embodiment.

### Second Modification of Second Embodiment

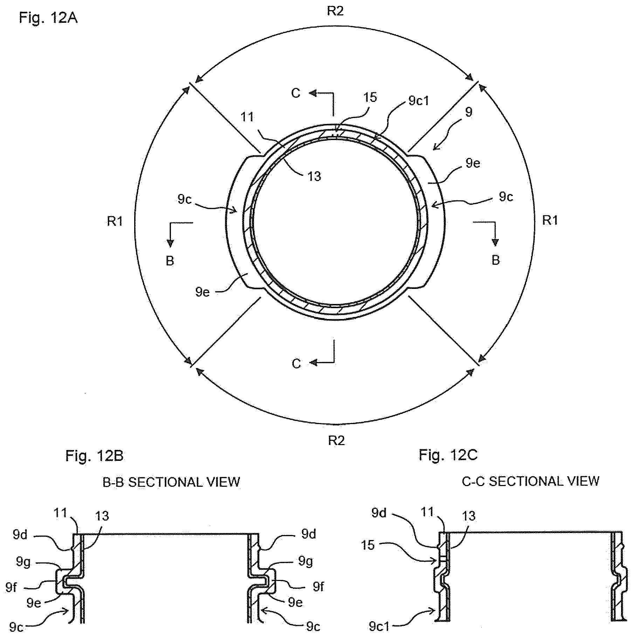

In the second embodiment, the constriction section 9c is not provided in the second region R2. Meanwhile, as illustrated in Figs. 12A to 12C, in the second modification, a minor constriction section 9c1 having a constriction amount less than that of the constriction section 9c is provided in the second region R2. In the present modification, the minor constriction section 9c1 is between the fresh air inlet 15 and the storage portion 7. Since the minor constriction section 9c1 has a less constriction amount, it tends not to interfere with formation of a flow passage for fresh air between the fresh air inlet 15 and the intermediate space 21. Accordingly, in the present modification as well, the actions and effects are obtained that are same as those in the second embodiment.

### Third Modification of Second Embodiment

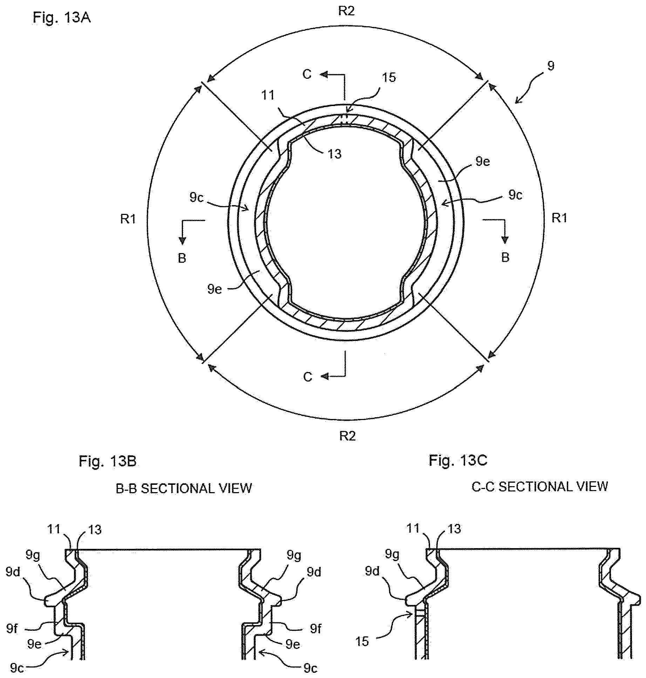

In the second embodiment, as illustrated in Fig. 9A, in the first region R1 of the approximately cylindrical mouth 9, the side wall of the mouth 9 above the constriction section 9c protrudes radially outside to form the constriction section 9c in the first region R1. The outer circumferential shape of the mouth 9 in the constriction section 9c is accordingly approximately circular. In contrast, in the third modification, as illustrated in Figs. 13A to 13C, the side wall of the approximately cylindrical mouth 9 in the first region R1 is depressed radially inside in the constriction section 9c of the mouth 9 to form the constriction section 9c in the first region R1. Accordingly, the mouth 9 in the constriction section 9c has a noncircular outer circumferential shape and the mouth 9 at the upright wall 9f has an approximately circular outer circumferential shape.

In the present modification as well, there is no constriction section 9c between the fresh air inlet 15 and the storage portion 7, and the actions and effects are thus obtained that are same as those in the second embodiment. In the present modification, the distance in the second region R2 from the central axis C the mouth 9 to the inner layer 13 is larger than that in the second embodiment. The inner layer 13 is accordingly thinner and the rigidity tends to decrease. The present modification thus has an advantage that the inner layer 13 is more readily delaminated from the outer layer 11 than that in the second embodiment.

In the following description, the descriptions in common with those in the embodiments described above are omitted.

### 3. Third Embodiment

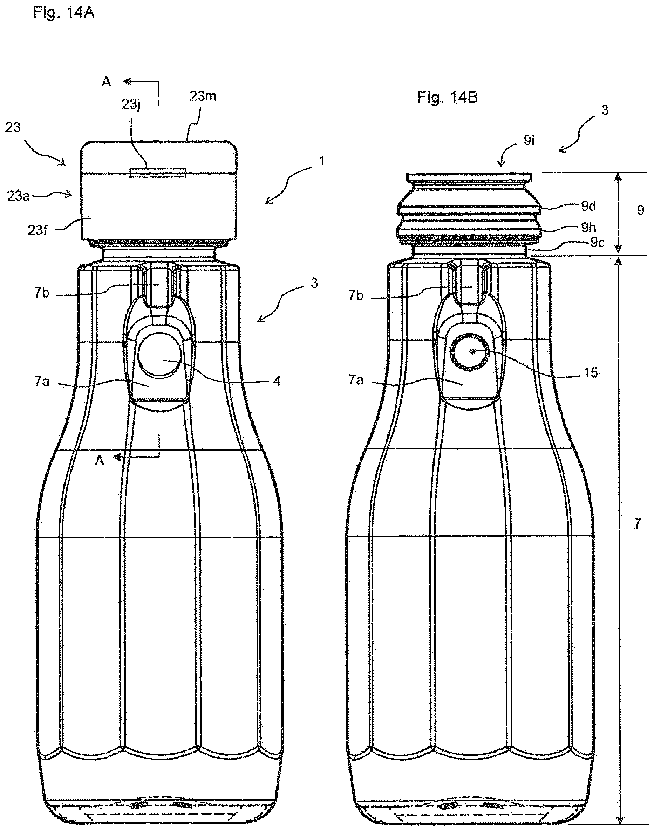

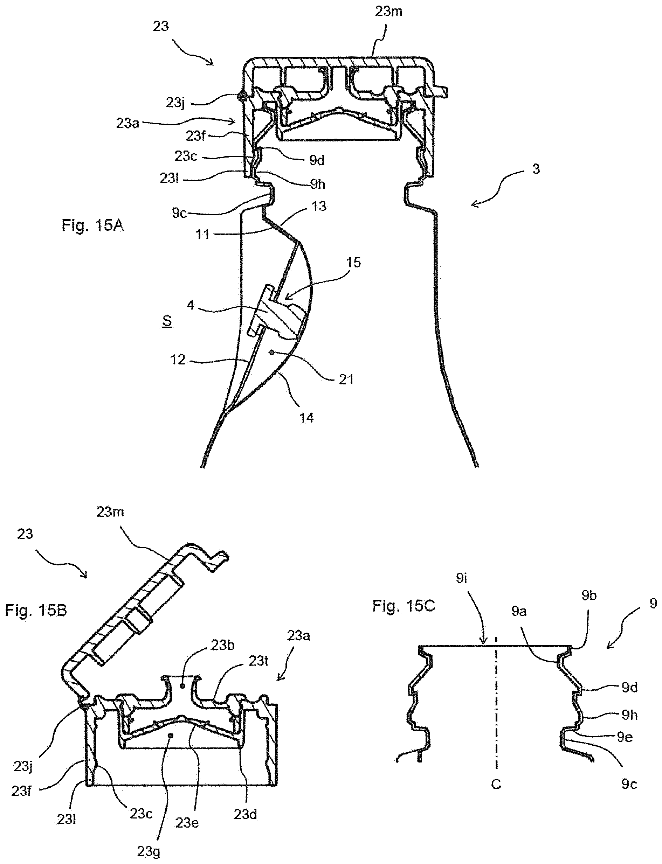

As illustrated in Figs. 14A to 15C, a delaminatable container 1 in the third embodiment of the present invention includes a container body 3, a valve member 4, a press-fit cap 23 mounted to the container body 3. The container body 3 includes a storage portion 7 to store the contents and a mouth 9 having an opening 9i to discharge the contents from the storage portion 7.

As illustrated in Figs. 15A to 15C, the container body 3 includes an outer layer 11 and an inner layer 13 in the storage portion 7 and the mouth 9. The outer layer 11 constitutes an outer shell 12 and the inner layer 13 constitutes an inner bag 14.

The mouth 9 includes an engagement section 9d along the outer circumference of the mouth 9. The mouth 9 in the present embodiment is assumed to have the press-fit cap 23 mounted thereto, and the engagement section 9d is an annular projection to be engageable with an engagement section 23c of the cap 23.

In addition, the mouth 9 includes a constriction section 9c constricting inside the mouth 9 on the storage portion 7 side from the engagement section 9d. The constriction section 9c has an upper wall 9e extending approximately vertically to a central axis C of the mouth 9.

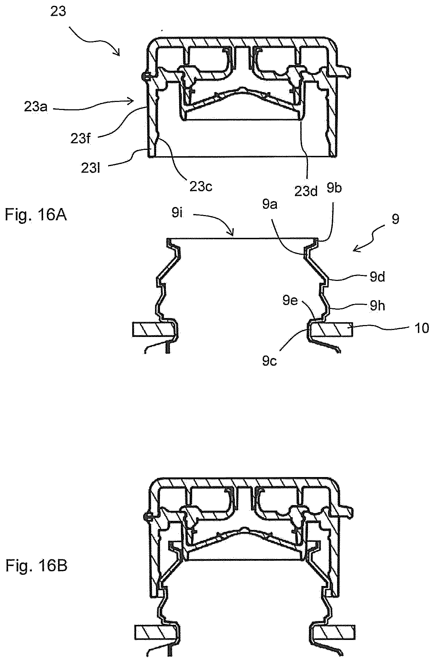

Then, with reference to Figs. 15A to 16B, a method of mounting the cap 23 to the mouth 9 is described. As illustrated in Fig. 15B, the cap 23 to be mounted includes a cap body 23a and a cap cover 23m. The cap body 23a and the cap cover 23m are coupled in a coupling portion 23j to allow opening and closing of the cap cover 23m. The cap body 23a includes a top 23t, an outlet 23b provided in the top 23t, a tubular portion 23f cylindrically extending from the outer circumference of the top 23t, an engagement section 23c provided along the inner circumference of the tubular portion 23f, an inner ring 23d cylindrically extending from the top 23t inside the tubular portion 23f, a flow passage 23g provided inside the inner ring 23d and communicating with the outlet 23b, and a check valve 23e provided in the flow passage 23g. The engagement section 23c is an annular projection to be engageable with the engagement section 9d of the mouth 9. While the cap 23 is mounted to the mouth 9, the contents in the storage portion 7 are discharged from the outlet 23b through the flow passage 23g. Meanwhile, the check valve 23e blocks an incoming flow of fresh air from the outlet 23b, and thus fresh air does not enter the inner bag 14 of the container body 3 to inhibit content degradation. The structure of the cap 23 described here is merely an example, and for example, a cap 23 having a check valve of another configuration may be employed.

For mounting of the cap 23, first, to suppress deformation of the storage portion 7 due to the impact of mounting the cap 23, as illustrated in Fig. 16A, a support 10 is brought to abut on a lower surface of the upper wall 9e of the constriction section 9c. In that state, as illustrated in Fig. 16B, the engagement section 23c of the cap 23 is brought to abut on the engagement section 9d of the mouth 9, and from this situation, the cap 23 is pressed further. As illustrated in Fig. 15A, the engagement section 23c thus passes over the engagement section 9d for engagement of the engagement section 23c with the engagement section 9d.

In the present embodiment, as illustrated in Fig. 15C, a protrusion 9h is provided in a position more distant from the opening 9i (position closer to the storage portion 7) than the engagement section 9d. The protrusion 9h is provided between the engagement section 9d and the upper wall 9e of the constriction section 9c. In other words, while the cap 23 is mounted to the mouth 9 as illustrated in Fig. 15A, the protrusion 9h is provided in a position more distant from the opening 9i than the engagement section 23c of the cap 23. The protrusion 9h is formed by enlarging the diameter in the area between the engagement section 9d and the upper wall 9e of the constriction section 9c.

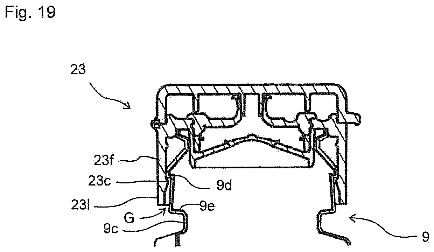

As illustrated in a reference example of Fig. 19, if there is no protrusion 9h between the engagement section 9d and the upper wall 9e of the constriction section 9c, a large gap G is formed between an end 231 of the tubular portion 23f and the mouth 9. The presence of the gap G tends to cause a tilt of the cap 23, and the tilt may cause separation of the inner ring 23d from the abutment section 9a and entrance of fresh air inside the container body 3. In contrast, in the present embodiment, the protrusion 9h is provided between the engagement section 9d and the upper wall 9e of the constriction section 9c. There is thus only a small or no gap between the end 231 of the tubular portion 23f and the mouth 9 to suppress the tilt of the cap 23 relative to the mouth 9 and inhibit the entrance of fresh air inside the container body 3. In the present embodiment, the protrusion 9h functions as "the tilt suppressor" in the appended claims. The protrusion 9h may, or does not have to, make contact with the end 231. The protrusion 9h and the end 231 in contact have an advantage of more effective suppression of the tilt of the cap 23. Meanwhile, the protrusion 9h and the end 231 not in contact have an advantage of reduction in interference between the end 231 and the protrusion 9h when the cap 23 is mounted to the mouth 9.

The storage portion 7 includes a valve member mounting recess 7a composed of an inclined plane, and the recess 7a includes the fresh air inlet 15. The fresh air inlet 15 is a through hole provided only in the outer shell 12 and communicates an intermediate space 21 between the outer shell 12 and the inner bag 14 with an external space S of the container body 3. In the present embodiment, the fresh air inlet 15 has the valve member 4 mounted thereto to regulate entrance and exit of air between the intermediate space 21 and the external space S. The recess 7a is provided to avoid interference between the valve member 4 and a shrink film when the storage portion 7 is covered with the shrink film. In addition, not to tightly close the recess 7a with the shrink film, an air circulation groove 7b is provided that extends in the direction from the recess 7a to the mouth 9.

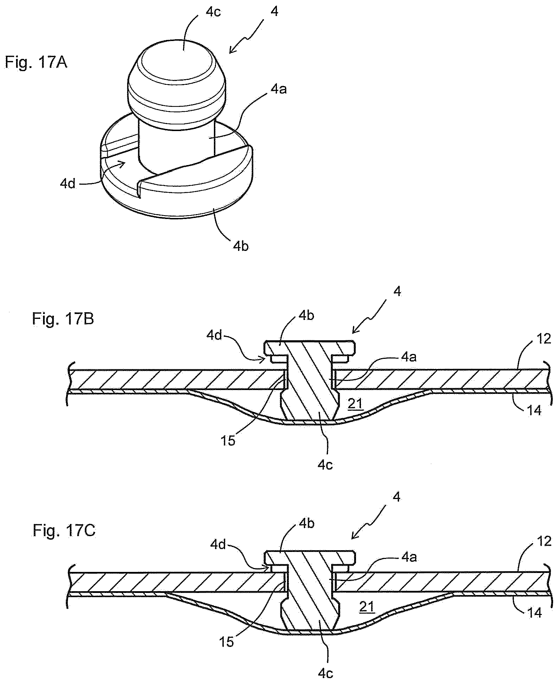

As illustrated in Figs. 17A to 17C, the valve member 4 includes a stem 4a disposed in the fresh air inlet 15, a lid 4c provided on the intermediate space 21 side of the stem 4a and having a greater cross section than that of the stem 4a, and a locking portion 4b provided on the external space S side of the stem 4a and preventing entrance of the valve member 4 into the intermediate space 21. The lid 4c is inserted into the intermediate space 21 while pressing and expanding the fresh air inlet 15, thereby mounting the valve member 4 to the container body 3. Accordingly, the lid 4c preferably has an end in a tapered shape. Such a valve member 4 is mountable only by pressing the lid 4c into the intermediate space 21 from outside the container body 3 and is thus excellent in productivity.

The lid 4c is configured to substantially close the fresh air inlet 15 when the outer shell 12 is compressed and has a shape of a smaller cross section as getting closer to the stem 4a. The locking portion 4b is configured to allow introduction of air into the intermediate space 21 when the outer shell 12 restores its shape after compression. When the outer shell 12 is compressed, the pressure in the intermediate space 21 becomes higher than the external pressure, leading to leakage of air in the intermediate space 21 from the fresh air inlet 15 to the outside. This pressure difference and the air flow cause movement of the lid 4c toward the fresh air inlet 15 to, as illustrated in Fig. 17B, close the fresh air inlet 15 with the lid 4c. Since the lid 4c has the shape with a smaller cross section as getting closer to the stem 4a, the lid 4c readily fits in the fresh air inlet 15 to close the fresh air inlet 15.

When the outer shell 12 is compressed even more in this situation, the pressure in the intermediate space 21 increases, and as a result, the inner bag 14 is compressed to discharge the contents of the inner bag 14. When the compressive force to the outer shell 12 is released, the outer shell 12 attempts to restore its shape by the elasticity of its own. At this point, as illustrated in Fig. 17C, the lid 4c is separated from the fresh air inlet 15 and the closure of the fresh air inlet 15 is released to introduce fresh air into the intermediate space 21. Not to close the fresh air inlet 15 with the locking portion 4b, the locking portion 4b includes a flow passage 4d to allow introduction of fresh air into the intermediate space 21 through the flow passage 4d and the fresh air inlet 15 even when the locking portion 4b abuts on the outer shell 12.

The present embodiment is configured that the gap between an edge of the fresh air inlet 15 and the valve member 4 is opened and closed by the movement of the valve member 4 to allow the valve member 4 to open and close the fresh air inlet 15. Meanwhile, the valve member itself may be configured to have a through hole and an on-off valve, which acts to open and close the through hole, thereby opening and closing the fresh air inlet 15.

Then the layer structure of the container body 3 is described in further detail. The container body 3 includes the outer layer 11 and the inner layer 13.

The outer layer 11 is formed of, for example, low-density polyethylene, linear low-density polyethylene, high-density polyethylene, polypropylene, an ethylene-propylene copolymer, or a mixture thereof, or the like. The outer layer 11 may have a multilayer structure. The structure may be, for example, a configuration in which both sides of a repro layer are sandwiched by polypropylene layers. As used herein, the term "repro layer" refers to a layer formed by recycling burrs generated during container molding. The outer layer 11 is formed thicker than the inner layer 13 so as to increase the restorability thereof.

In the present embodiment, the outer layer 11 includes a random copolymer layer containing a random copolymer of propylene and another monomer. The outer layer 11 may be a single layer of the random copolymer or may have a multilayer structure. It may be, for example, a configuration in which both sides of the repro layer are sandwiched by random copolymer layers. Formation of the outer layer 11 using a random copolymer of a specific configuration allows improvement in the shape restorability, transparency, and heat resistance of the outer shell 12.

The random copolymer has a content of a monomer other than propylene of less than 50 mol% and preferably from 5 to 35 mol%. Specifically, this content is, for example, 5, 10, 15, 20, 25, and 30 mol% or it may be in a range between any two values exemplified here. The monomer to be copolymerized with propylene may be one that improves impact resistance of the random copolymer compared with a homopolymer of polypropylene, and ethylene is particularly preferred. In the case of a random copolymer of propylene and ethylene, the ethylene content is preferably from 5 to 30 mol%. Specifically, it is, for example, 5, 10, 15, 20, 25, and 30 mol% or it may be in a range between any two values exemplified here. The random copolymer preferably has a weight average molecular weight from 100 thousands to 500 thousands, and even more preferably from 100 thousands to 300 thousands. Specifically, the weight average molecular weight is, for example, 100 thousands, 150 thousands, 200 thousands, 250 thousands, 300 thousands, 350 thousands, 400 thousands, 450 thousands, and 500 thousands or it may be in a range between any two values exemplified here.

The random copolymer has a tensile modulus of elasticity preferably from 400 to 1600 MPa and more preferably from 1000 to 1600 MPa. This is because the shape restorability is particularly good with a tensile modulus of elasticity in such range. Specifically, the tensile modulus of elasticity is, for example, 400, 500, 600, 700, 800, 900, 1000, 1100, 1200, 1300, 1400, 1500, and 1600 Mpa or it may be in a range between any two values exemplified here.

Since an excessively hard container causes poor usability of the container, the outer layer 11 may be formed by mixing a softening material, such as linear low-density polyethylene, for example, to the random copolymer. Note that, in order not to severely interfere with effective properties of the random copolymer, the material to be mixed with the random copolymer is preferably mixed to be less than 50 weight% based on the entire mixture. For example, the outer layer 11 may be formed of a material having the random copolymer and linear low-density polyethylene mixed at a weight ratio of 85:15.

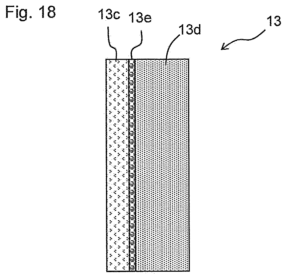

As illustrated in Fig. 18, the inner layer 13 includes an EVOH layer 13c provided on a container outer surface side, an inner surface layer 13d provided on a container inner surface side of the EVOH layer 13c, and an adhesion layer 13e provided between the EVOH layer 13c and the inner surface layer 13d. By providing the EVOH layer 13c, it is possible to improve gas barrier properties and delamination properties from the outer layer 11. The adhesion layer 13e may be omitted.

The EVOH layer 13c is a layer containing an ethylene-vinyl alcohol copolymer (EVOH) resin and is obtained by hydrolysis of a copolymer of ethylene and vinyl acetate. The EVOH resin has an ethylene content, for example, from 25 to 50 mol%, and from the perspective of oxygen barrier properties, it is preferably 32 mol% or less. Although not particularly defined, the lower limit of the ethylene content is preferably 25 mol% or more because the flexibility of the EVOH layer 13c is prone to decrease when the ethylene content is less. The EVOH layer 13c preferably contains an oxygen absorbent. The content of an oxygen absorbent in the EVOH layer 13c further improves the oxygen barrier properties of the EVOH layer 13c.

The inner surface layer 13d is a layer to make contact with the contents of the delaminatable container 1. It contains, for example, polyolefin, such as low density polyethylene, linear low density polyethylene, high density polyethylene, polypropylene, an ethylene-propylene copolymer, and a mixture thereof, and preferably low density polyethylene or linear low density polyethylene. The resin contained in the inner surface layer 13d preferably has a tensile modulus of elasticity from 50 to 300 MPa and more preferably from 70 to 200 MPa. This is because the inner surface layer 13d is particularly flexible when the tensile modulus of elasticity is in such range. Specifically, the tensile modulus of elasticity is, for example, specifically for example, 50, 100, 150, 200, 250, and 300 Mpa or it may be in a range between any two values exemplified here.

The adhesion layer 13e is a layer having a function of adhering the EVOH layer 13c to the inner surface layer 13d, and it is, for example, a product of adding acid modified polyolefin (e.g., maleic anhydride modified polyethylene) with carboxyl groups introduced therein to polyolefin described above or an ethylene-vinyl acetate copolymer (EVA). An example of the adhesion layer 13e is a mixture of acid modified polyethylene with low density polyethylene or linear low density polyethylene.

### 4. Fourth Embodiment

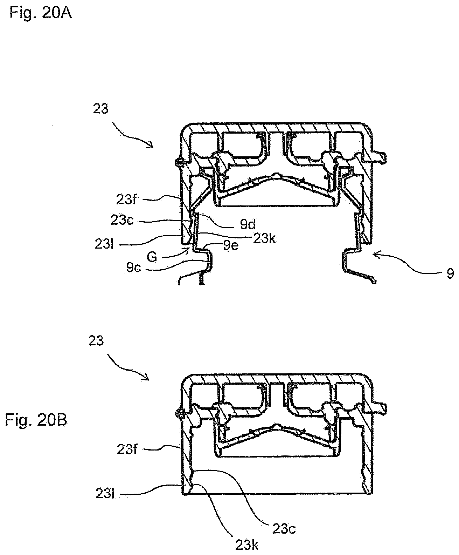

With reference to Figs. 20A and 20B, the fourth embodiment of the present invention is described. The present embodiment is similar to the third embodiment and mainly differs in that a tilt suppressor is provided in a cap 23.

In the present embodiment, same as the reference example in Fig. 19, the mouth 9 has no protrusion 9h. In contrast, the configuration of the cap 23 is different from the reference example in Fig. 19 in that an end 231 includes a protrusion 23k. A gap G between the cap 23 and the mouth 9 at the end 231 is thus narrowed to suppress the tilt of the cap 23 relative to the mouth 9. Accordingly, in the present embodiment, the protrusion 23k functions as "the tilt suppressor".

The present invention is allowed to be carried out in the following embodiments:
- the protrusion 23k may be configured to make contact with the mouth 9 although, in the fourth embodiment, the protrusion 23k does not make contact with the mouth 9 while the cap 23 is mounted to the mouth 9;
- the mouth 9 may be provided with the protrusion 9h and the cap 23 may be provided with the protrusion 23k although, in the fourth embodiment, the mouth 9 has no protrusion 9h;
- the valve member 4 may be omitted, and in this case, the contents are allowed to be discharged by compression deformation of the outer shell 12 while the fresh air inlet 15 is closed with a finger or the like; and
- the fresh air inlet 15 may be provided in the mouth 9.

### Reference Signs List

1: Delaminatable Container, 3: Container Body, 4: Valve Member, 5: Tube, 6: Mobile Part, 7: Storage Portion, 9: Mouth, 11: Outer Layer, 12: Outer Shell, 13: Inner Layer, 14: Inner Bag, 15: Fresh Air Inlet, 21: Intermediate Space, 23: Cap, 27: Bottom Sealing Portion

## Claims

1. A delaminatable container (1), comprising a container body (3) having a storage portion (7) to store contents and a mouth (9) to discharge the contents from the storage portion (7), the storage portion (7) and the mouth (9) having an outer layer (11) and an inner layer (13), and having an inner bag (14) composed of the inner layer (13) to be shrunk with a decrease in the contents, wherein
the mouth (9) includes an engagement section (9d) to be engaged with a cap (23) mounted to the mouth (9),
**characterized in, that**
a constriction section (9c) is provided on a storage portion side from the engagement section (9d) and constricting inside the mouth (9),
the engagement section (9d) is a ring-shaped projection capable of being engaged with a press-fit cap (23), and
the mouth (9) includes an upright wall (9f) extending from an outer edge of an upper wall (9e) of the constriction section (9c) at an angle between 45 and 135 degrees relative to the upper wall (9e), so that
a gap is provided between the inner layer (13e) at the upper wall (9e) and the inner layer (13f) at the upright wall (9f), so that the inner layer (13) is not caught in the outer layer (11e, 11f) at the upper wall (9e) and at the upright wall (9f).

2. The container (1) of Claim 1, wherein the upper wall (9e) extends approximately perpendicular to a central axis of the mouth (9).

3. The container (1) of Claim 1 or 2, wherein the upright wall (9f) has an angle between 60 and 120 degrees relative to the upper wall (9e).

4. The container (1) of any one of Claims 1 to 3, further comprising a facing wall (9g) extending inside the mouth (9) from an upper edge of the upright wall (9f),
wherein a gap is provided between the inner layer (13e) at the upper wall (9e) and the inner layer (13g) at the facing wall (9g), so that the inner layer (13e) is not caught in the outer layer (11f) at the upper wall (9e) and at the facing wall (9g).

5. The container (1) of Claim 4, wherein the facing wall (9g) has an angle between -10 and 80 degrees relative to the upper wall (9e).

6. The container (1) of any one of Claims 1 to 5, wherein the mouth (9) includes an abutment section (9a) to abut on an inner ring (23d) of the cap (23), and
the abutment section (9a) is provided in an area closer to an outlet of the mouth (9) than the engagement section (9d).

7. The container (1) of any one of Claims 1 to 6, wherein
the mouth (9) circumferentially has a first region provided with the constriction section (9c) and a second region provided without the constriction section (9c) or provided with a minor constriction section having a constriction amount less than that of the constriction section (9c) in the first region, and
the second region of the mouth (9) is provided with a fresh air inlet (15) to introduce fresh air into an intermediate space (21) between the outer layer (11) and the inner layer (13).

8. The container (1) of Claim 7, wherein the fresh air inlet (15) is provided in a position closer to an outlet of the mouth (9) than the upper wall (9e).

9. A method of mounting a cap (23) to the container of any one of Claims 1 to 8, comprising
mounting the cap (23) to the mouth (9) while the mouth is supported by having a support (10) to support the mouth (9) abut on a lower surface of the upper wall (9e) when the cap (23) is mounted to the mouth (9).

## Patentansprüche

1. Delaminierbarer Behälter (1), umfassend einen Behälterkörper (3) mit einem Aufbewahrungsteil (7) zur Aufbewahrung von Inhalten und eine Mündung (9) zur Ausgabe der Inhalte aus dem Aufbewahrungsteil (7), wobei der Aufbewahrungsteil (7) und die Mündung (9) eine äußere Schicht (11) und eine innere Schicht (13) aufweisen, und einem aus der inneren Schicht (13) gebildeten inneren Beutel (14), der bei Abnahme des Inhalts zu verkleinern ist, wobei die Mündung (9) einen Eingriffsabschnitt (9d) beinhaltet, der mit einer an der Mündung (9) befestigten Kappe (23) in Eingriff steht, **dadurch gekennzeichnet, dass** ein verengter Abschnitt (9c) an der Seite des Eingriffsabschnittes (9d), an der sich das Aufbewahrungsteil befindet, vorgesehen ist und sich innerhalb der Mündung (9) verengt, wobei der Eingriffsabschnitt (9d) ein ringförmiger Vorsprung ist, der mit einer eingepressten Kappe (23) in Eingriff bringbar ist, und die Mündung (9) eine aufrechte Wand (9f) beinhaltet, die sich von einem äußeren Rand einer oberen Wand (9e) des verengten Abschnitts (9c) in einem Winkel zwischen 45 und 135 Grad im Verhältnis zu der oberen Wand (9e) erstreckt, sodass eine Lücke zwischen der inneren Schicht (13e) an der oberen Wand (9e) und der inneren Schicht (13f) an der aufrechten Wand (9f) vorgesehen ist, sodass die innere Schicht (13) nicht in der äußeren Schicht (11e, 11f) an der oberen Wand (9e) und der aufrechten Wand (9f) gefasst ist.

2. Behälter (1) nach Anspruch 1, wobei die obere Wand (9e) sich ungefähr senkrecht zu einer Mittelachse der Mündung (9) erstreckt.

3. Behälter (1) nach Anspruch 1 oder 2, wobei die aufrechte Wand (9f) einen Winkel zwischen 60 und 120 Grad im Verhältnis zu der oberen Wand (9e) aufweist.

4. Behälter (1) nach einem der Ansprüche 1 bis 3, ferner umfassend eine Stirnwand (9g), die sich innerhalb der Mündung (9) von einem oberen Rand der aufrechten Wand (9f) erstreckt, wobei eine Lücke zwischen der inneren Schicht (13e) an der oberen Wand (9e) und der inneren Schicht (13g) an der Stirnwand (9g) vorgesehen ist, sodass die innere Schicht (13e) nicht in der äußeren Schicht (11f) an der oberen Wand (9e) und an der Stirnwand (9g) gefasst ist.

5. Behälter (1) nach Anspruch 4, wobei die Stirnwand (9g) einen Winkel zwischen -10 und 80 Grad im Verhältnis zu der oberen Wand (9e) aufweist.

6. Behälter (1) nach einem der Ansprüche 1 bis 5, wobei die Mündung (9) einen Widerlagerabschnitt (9a) zur Anlage an einen inneren Ring (23d) der Kappe (23) beinhaltet und der Widerlagerabschnitt (9a) in einem Bereich vorgesehen ist, der näher an einem Auslass der Mündung gelegen ist als an dem Eingriffsabschnitt (9d).

7. Behälter (1) nach einem der Ansprüche 1 bis 6, wobei die Mündung (9) entlang des Umfangs eine erste Region, die mit dem verengten Abschnitt (9c) vorgesehen ist, und eine zweite Region, die ohne den verengten Abschnitt (9c) vorgesehen ist oder mit einem kleineren verengten Abschnitt vorgesehen ist, der in einem geringeren Maß verengt ist als der verengte Abschnitt (9c) in der ersten Region, aufweist, und die zweite Region der Mündung (9) mit einem Frischlufteinlass (15) zum Einführen von frischer Luft in einen Zwischenbereich (21) zwischen der äußeren Schicht (11) und der inneren Schicht (13) vorgesehen ist.

8. Behälter (1) nach Anspruch 7, wobei der Frischlufteinlass (15) in einer Position vorgesehen ist, die näher an einem Auslass der Mündung (9) gelegen ist als die obere Wand (9e).

9. Verfahren zum Anbringen einer Kappe (23) an den Behälter nach einem der Ansprüche 1 bis 8, umfassend Anbringen der Kappe (23) an der Mündung (9), während die Mündung von einem Träger zum Tragen der Mündung (9) zur Anlage an einer unteren Oberfläche der oberen Wand (9e) getragen wird, wenn die Kappe (23) an der Mündung (9) angebracht wird.

## Revendications

1. Récipient délaminable (1), comprenant un corps de récipient (3) avec une partie de stockage (7) destinée à stocker un contenu, et une embouchure (9) pour le déversement du contenu de la partie de stockage (7), la partie de stockage (7) et l'embouchure (9) présentant une couche extérieure (11) et une couche intérieure (13), et ayant une poche intérieure (14) constituée de la couche intérieure (13) à contracter avec une réduction de contenu, où l'embouchure (9) comprend une section de contact (9d) à mettre en prise avec un bouchon (23) monté sur l'embouchure (9),
**caractérisé en ce qu'**une section de constriction (9c) est prévue sur le côté de la partie de stockage depuis la section de contact (9d), resserrant l'intérieur de l'embouchure (9),
la section de contact (9d) est une saillie annulaire pouvant être mise en prise avec un bouchon (23) à ajustement serré, et
l'embouchure (9) comporte une paroi montante (9f) s'étendant depuis un bord extérieur d'une paroi supérieure (9e) de la section de constriction (9c) suivant un angle compris entre 45 et 135 degrés par rapport à la paroi supérieure (9e),
de sorte qu'un interstice est prévu entre la couche intérieure (13e) sur la paroi supérieure (9e) et la couche intérieure (13f) sur la paroi montante (9f), si bien que la couche intérieure (13) n'est pas prise dans la couche extérieure (11e, 11f) sur la paroi supérieure (9e) et sur la paroi montante (9f).

2. Récipient (1) selon la revendication 1, où la paroi supérieure (9e) s'étend sensiblement perpendiculairement à un axe central axis de l'embouchure (9).

3. Récipient (1) selon la revendication 1 ou la revendication 2, où la paroi montante (9f) forme un angle compris entre 60 et 120 degrés par rapport à la paroi supérieure (9e).

4. Récipient (1) selon l'une des revendications 1 à 3, comprenant en outre une paroi inclinée (9g) s'étendant vers l'intérieur de l'embouchure (9) depuis un bord supérieur de la paroi montante (9f),
un interstice étant prévu entre la couche intérieure (13e) sur la paroi supérieure (9e) et la couche intérieure (13g) sur la paroi inclinée (9g), de sorte que la couche intérieure (13e) n'est pas prise dans la couche extérieure (11f) sur la paroi supérieure (9e) et sur la paroi inclinée (9g).

5. Récipient (1) selon la revendication 4, où la paroi inclinée (9g) forme un angle compris entre -10 et 80 degrés par rapport à la paroi supérieure (9e).

6. Récipient (1) selon l'une des revendications 1 à 5, où l'embouchure (9) comprend une section de butée (9a) butant contre une bague intérieure (23d) du bouchon (23), et où la section de butée (9a) est prévue dans une zone plus proche de la sortie de l'embouchure (9) que la section de contact (9d).

7. Récipient (1) selon l'une des revendications 1 à 6, où
l'embouchure (9) présente circonférentiellement une première zone avec la section de constriction (9c) et une deuxième zone sans la section de constriction (9c) ou avec une section de constriction mineure dont la valeur de constriction est inférieure à celle de la section de constriction (9c) dans la première zone, et où
la deuxième zone de l'embouchure (9) est pourvue d'une entrée d'air frais (15) pour la pénétration d'air frais dans un espace intercalaire (21) entre la couche extérieure (11) et la couche intérieure (13).

8. Récipient (1) selon la revendication 7, où l'entrée d'air frais (15) est prévue à un emplacement plus proche de la sortie de l'embouchure (9) que la paroi supérieure (9e).

9. Procédé de montage d'un bouchon (23) sur le récipient selon l'une des revendications 1 à 8, comprenant le montage du bouchon (23) sur l'embouchure (9), l'embouchure étant supportée au moyen d'un support (10) d'embouchure (9) contre une surface inférieure de la paroi supérieure (9e) quand le bouchon (23) est monté sur l'embouchure (9).
